# EUROPEAN PATENT APPLICATION

(11) **EP 3 220 118 A1**
(43) Date of publication of application: **20.09.2017**
(21) Application number: 16160800.5
(22) Date of filing: 17.03.2016
(51) Int. Cl.: G01M 3/00, F17D 5/00, F16L 55/26, G01M 5/00

(54) **A SYSTEM AT LEAST COMPRISING A HOLLOW BODY**

(71) Applicant: Shell Internationale Research Maatschappij B.V., 2596 HR Den Haag (NL)
(72) Inventor: JANSSEN, Franciscus Antonius Henri, 1031 HW Amsterdam (NL); INGENBLEEK, Gerardus Wilhelmus Henricus, 1031 HW Amsterdam (NL)
(74) Representative: Matthezing, Robert Maarten

(57) **Abstract**

The present invention provides a system (1) at least comprising a first pipe (2), a hollow body (3) and a reader (4);
wherein the hollow body (3) is provided with a plurality of wireless sensors (5); and
wherein the first pipe (2) is positioned adjacent to the hollow body (3) defining a predefined travel path for the reader (4), which reader (4) can monitor the sensors (5) of the hollow body (3).

## Description

The present invention relates to a system comprising a hollow body. In particular, the present invention relates to a system for monitoring the hollow body or its content by means of sensors. Various systems for monitoring a hollow body are known in the art.

The paper "Wireless Inductive Robotic Inspection of Structures" by B. Esser et al., Proceedings of the IASTED International Conference, Robotics and Applications 2000, 14-16 August 2000 Honolulu, Hawaii, USA, describes an autonomous robotic structural inspection system capable of remote powering and data collection from a network of embedded sensing nodes.

WO2012097241 discloses a method to monitor the structural health of a flexible pipe including disposing one or more sensors within layers of the flexible pipe and wirelessly monitoring the one or more sensors with at least one receiver.

A problem with known systems for monitoring a hollow body, is that good communication between sensors and reader may be problematic. This problem is particularly felt in case the hollow body is in a location that is difficult to access, such as in case of a buried or offshore pipeline. As an example, ROVs (Remotely Operated Vehicles) as often used in offshore locations, may experience difficulties in achieving sufficient proximity to allow appropriate communication between reader and sensors.

A further problem is that the use of PIGs (Pipeline Inspection Gauges) that are transported through a pipeline for monitoring the same pipeline may result in plugging of the pipeline.

It is an object of the present invention to overcome or minimize the above problems of problematic communication and potential plugging of pipelines.

One or more of the above or other objects can be achieved by providing a system at least comprising a hollow body, a first pipe and a reader;
wherein the hollow body is provided with a plurality of wireless sensors; and
wherein the first pipe is positioned adjacent to the hollow body defining a predefined travel path for the reader, which reader can monitor the sensors of the hollow body.

It has surprisingly been found according to the present invention that the system allows for efficient communication between the reader and the sensor. Also, in case the hollow body is a pipeline, the risk of plugging of the pipeline by the reader is avoided.

An advantage of the system according to the present invention is that the monitoring is done in a nondestructive manner.

The person skilled in the art will readily understand that the hollow body is not limited in any way. The hollow body is typically intended for transporting or containing fluids and is preferably selected from a pipeline, a vessel or a container. The wall of the hollow body may comprise one or more layers. Also, the hollow body may be provided with specific coatings and liners, dependent on its intended use.

Also, the first pipe is not limited in any way, provided that it defines a predefined travel path for the reader.

Furthermore, the person skilled in the art will understand that the wireless sensors are not limited in any way. Also, the wireless sensors may be intended for monitoring various conditions and properties such as temperature, moist content, presence of (a certain amount of) certain compounds, strain, vibrations, etc. The wireless sensors may be selected from a broad range of sensors. Preferably, the wireless sensors are Radio Frequency (RF) activated sensors.

The wireless sensors may be located on the inside or outside of the hollow body, or - as preferred according to the present invention - embedded in the wall of the hollow body. To this end, the wireless sensors may for example be interspersed between various layers of the wall of the hollow body.

According to a preferred embodiment of the present invention, the system comprises an outer layer surrounding both the hollow body and the first pipe. This outer layer may provide for additional structural support and protection. An advantage of the use of this outer layer is that it can be made from a metallic (or other electromagnetic shielding material) without affecting the communication between the sensors and the reader.

Both the hollow body and the first pipe may be composed from a broad range of materials and may comprise one or more layers. Of course, the hollow body and first pipe may be composed of different material as they serve different functions. Although the use of metal or other electromagnetic shielding materials for the hollow body and the first pipe is not excluded, care should be taken that it does not affect the communication between reader and sensors. Hence, the hollow body and first pipe are typically made from non-metallic materials such as concrete or a composite material based on polymers (optionally containing fibres).

Preferably, the hollow body and the first pipe define an interface, which interface is made from a material having an Electromagnetic Shielding Effectiveness of below 40 dB, preferably below 30 dB, more preferably below 20 dB, even more preferably below 10 dB, as determined according to ASTM D 4935-10. Examples of such material are polymeric materials, such as LDPE, PET, LCP (Liquid Crystal Polymer) and PES (Poly Ether Sulfone). In doing so, the material of the hollow body and the first pipe not defining the interface may (if desired) still be composed from an electromagnetic shielding material, without affecting the communication between sensors and reader. Preferably, both the hollow body and the first pipe are made (completely; so not only the interface) from a material having an Electromagnetic Shielding Effectiveness of below 40 dB, preferably below 30 dB, more preferably below 20 dB, even more preferably below 10 dB, as determined according to ASTM D 4935-10.

As mentioned above, the hollow body is not limited in any way is preferably selected from a pipeline, a vessel or a container. According to an especially preferred embodiment of the present invention, the hollow body comprises a pipe ('second pipe'). Preferably, the first pipe has a smaller diameter than the second pipe. The first pipe may have various alignments vis-à-vis the second pipe, including a parallel and helical alignment, as long as the predefined travel path for the reader is not impaired. Preferably, the first pipe is substantially parallel to the second pipe. In this way the first pipe is juxtaposed and adjacent to the second pipe. Further it is preferred that the second pipe is intended for transporting hydrocarbons such as oil or natural gas.

During use, the reader can monitor the sensors of the hollow body, whilst travelling through the predefined travel path defined by the first pipe. The person skilled in the art will understand that the reader is not limited in any way. As the person skilled in the art is familiar with wireless sensors and associated suitable readers, this is not further discussed in detail here. The system may comprise one or more readers. Also, in case of multiple readers, the readers may have different reading functionalities and may communicate with the same or different sensors.

During use of the system, the reader may be propelled through the first pipe in different ways, such as by wheels, a motor, etc. Preferably, during use of the system, the reader can be propelled through the first pipe using a compressed fluid.

Hereinafter the invention will be further illustrated by the following non-limiting drawings. Herein shows:
Fig. 1 schematically a cross-sectional view of a system according to the present invention, wherein the hollow body is in the form of a pipeline; and
Fig. 2 a cross-sectional view of the system of Fig. 1 along line A-A'.

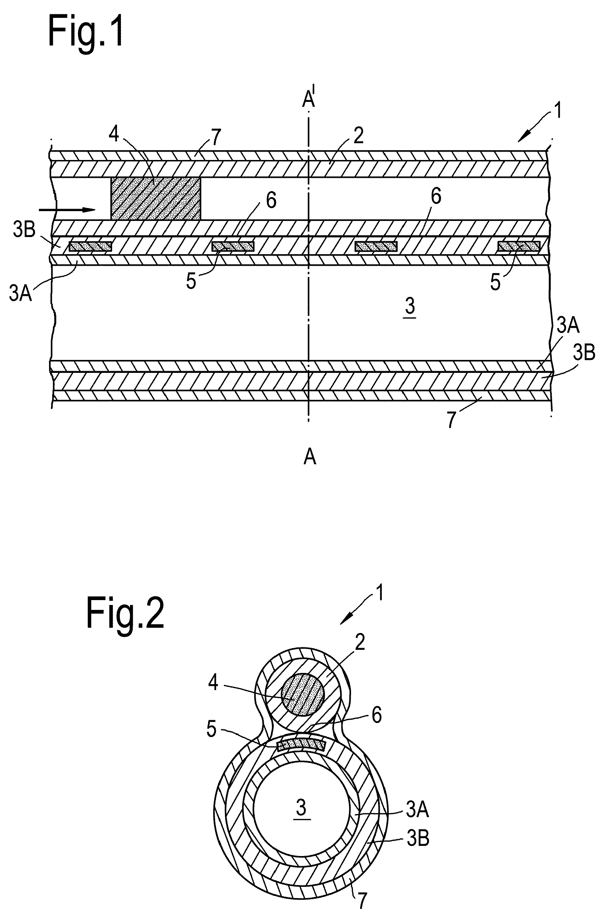

Figure 1 shows a cross-sectional view of a system generally referred to with reference number 1. The system 1 comprises a first pipe 2, a hollow body 3 in the form of a pipe ('second pipe') and a reader 4. The second pipe 3 comprises an inner layer 3A and an outer layer 3B, wherein the outer layer 3B is provided with a plurality of wireless (RF activated) sensors 5, which are embedded in the outer layer 3B. The first pipe 2 is positioned adjacent and in parallel alignment to the second pipe 3 defining a predefined travel path for the reader 4. The first pipe 2 has a smaller diameter than the second pipe 3.

The first pipe 2 and the second pipe 3 define an interface 6, which interface 6 is made from a low electromagnetic shielding material, thereby allowing communication between the sensors 5 and the reader 4.

The system 1 further comprises a protective outer layer 7 surrounding both the first pipe 2 and the second pipe 3.

During use, the reader 4 can monitor the wireless sensors 5 of the second pipe 3, whilst travelling through the predefined travel path defined by the first pipe 2. The reader 4 can be propelled through the first pipe 2 in various ways, for example using a compressed fluid.

The person skilled in the art will readily understand that many modifications may be made without departing from the scope of the invention.

## Claims

1. A system (1) at least comprising a first pipe (2), a hollow body (3) and a reader (4);
wherein the hollow body (3) is provided with a plurality of wireless sensors (5); and
wherein the first pipe (2) is positioned adjacent to the hollow body (3) defining a predefined travel path for the reader (4), which reader (4) can monitor the sensors (5) of the hollow body (3).

2. The system (1) according to claim 1, wherein the wireless sensors (5) are Radio Frequency (RF) activated sensors.

3. The system (1) according to claim 1 or 2, wherein the wireless sensors (5) are embedded in a wall (3B) of the hollow body (3).

4. The system (1) according to any of the preceding claims, wherein the system (1) comprises an outer layer (7) surrounding both the hollow body (3) and the first pipe (2).

5. The system (1) according to any of the preceding claims, wherein the hollow body (3) and the first pipe (2) define an interface (6), which interface (6) is made from a material having an Electromagnetic Shielding Effectiveness of below 40 dB, preferably below 30 dB, more preferably below 20 dB, even more preferably below 10 dB, as determined according to ASTM D 4935-10.

6. The system (1) according to any of the preceding claims, wherein the hollow body (3) comprises a pipe ("second pipe').

7. The system (1) according to claim 6, wherein the first pipe (2) has a smaller diameter than the second pipe (3).

8. The system (1) according to claim 6 or 7, wherein the first pipe (2) is substantially parallel to the second pipe (3).

9. The system (1) according to any of the preceding claims, wherein the reader (4) can be propelled through the first pipe (2) using a compressed fluid.
